# EUROPÄISCHE PATENTSCHRIFT

(11) **EP 0 530 551 B1**
(45) Veröffentlichungstag und Bekanntmachung des Hinweises auf die Patenterteilung: **21.10.1998**
(21) Anmeldenummer: 92113680.0
(22) Anmeldetag: 11.08.1992
(51) Int. Cl.: G02B 6/42

(54) **Vorrichtung zur Herstellung einer Vielzahl von Hochfrequenzverbindungen zwischen zwei Schaltungsanordnungen zur parallelen Datenverarbeitung**
Device for the realisation of the multiplicity of high frequency interconnections between two circuit arrangements for parallel data processing
Appareil pour la réalisation d'une multiplicité de connexions à haute fréquence entre deux dispositifs de circuit pour le traitement parallèle de données

(30) Priorität: 04.09.1991 DE 4129424
(43) Veröffentlichungstag der Anmeldung: 10.03.1993
(73) Patentinhaber: SIEMENS AKTIENGESELLSCHAFT, 80333 München (DE)
(72) Erfinder: Tietgen, Karl-Heinz, Dr., W-8000 München 80 (DE); Jiang, Jie, Dipl.-Ing., W-4100 Duisburg (DE)

(56) Entgegenhaltungen:
- EP-A- 237 237
- EP-A- 440 087
- DE-A- 3 924 659
- PATENT ABSTRACTS OF JAPAN vol. 8, no. 248 (P-313)(1685) 14. November 1984 & JP-A-59 121 008 ( TOUKIYOU KOGYO ) 12. Juli 1984
- APPLIED OPTICS. Bd. 30, Nr. 9, 20. Maerz 1991, NEW YORK US Seiten 1090 - 1095 MITSUO TAKEDA ET.AL. 'Integrated optic array illuminator :a design for efficient and uniform power distribution'
- IBM TECHNICAL DISCLOSURE BULLETIN. Bd. 26, Nr. 4, September 1983, NEW YORK US Seiten 1793 - 1796 BALLIET L. ET.AL. 'Optical transmission system for interconnecting electronic units'

## Beschreibung

Die Erfindung betrifft eine Vorrichtung zur Herstellung einer Vielzahl von Hochfrequenzverbindungen zwischen zwei Schaltungsanordnungen zur parallelen Datenverarbeitung nach dem Oberbegriff des Patentanspruchs 1.

In elektronischen Schaltungen zur Darallelen Datenverarbeitung, beispielsweise Sortiernetzwerke oder ATM-Schaltnetzwerke, wird eine große Zahl komplexer Hochfrequenzverbindungen hoher örtlicher Dichte benötigt. Bekannt ist es, derartige Hochfrequenzverbindungen durch elektrische Verbindungen herzustellen (siehe dazu J.J. Hickey, W.S. Marcus: The imDlementation of High Speed ATM Packet Switch using CMOS VLSI, Proceedings, 13. Intern. Switching Symposium, Vol. I (1990) S. 75-84).

Elektrisch lassen sich diese Hochfrequenzverbindungen jedoch mit zunehmender Datenrate nur noch schwer oder nicht mehr realisieren.

Optische Leitungen zur Herstellung solcher Hochfrequenzverbindungen sind bisher fast ausschließlich theoretisch untersucht worden. Eine Realisierungsmöglichkeit einer optischen Verbindung besteht darin, für jede herzustellende Hochfrequenzverbindung je einen elektrooptischen Wandler zur Erzeugung eines Lichtstrahls und einen zugeordneten, von diesem Lichtstrahl getroffenen optoelektrischen Wandler vorzusehen. Der elektrooptische Wandler wandelt elektrische Leistung in optische Leistung um, und gibt diese in Form des Lichtstrahls ab. Umgekehrt wandelt der optoelektrische Wanlder die im Lichtstrahl zugeführte optische Leistung wieder in elektrische Leistung um.

Die elektronischen Schaltungen sind üblicherweise auf Platinen realisiert. Beispielsweise weist eine der Platinen auf einer zur Abgabe optischer Leistung vorgesehenen Flachseite eine Vielzahl von elektrooptischen Wandlern auf, von denen jeder für eine herzustellende Hochfrequenzverbindung vorgesehen ist. Die andere Platine weist auf einer für den Emofang der optischen Leistung vorgesehenen Flachseite eine Vielzahl optoelektrischer Wandler auf, von denen jeder einem elektrooptischen Wandler der anderen Platine zugeordnet ist. Die Platinen werden so angeordnet, daß die Flachseite mit den elektrooptischen Wandlern der einen Platine der Flachseite mit den optoelektrischen Wandlern der anderen Platine gegenüberliegt. Ideal wäre, wenn jedem elektrooptischen Wandler der einen Platine der zugeordnete optoelektrische Wandler der anderen Platine, auf den der von diesem elektrooptischen Wandler abgegebene Lichtstrahl auftrifft, gegenau gegenüberläge. Der von jedem elektrooptischen Wandler abgegebene Lichtstrahl könnte sich in diesem Fall senkrecht zu den Flachseiten der Platinen und auf kürzestem Weg von einer Platine zur anderen ausbreiten. In der Praxis ist dies jedoch nicht möglich, da die elektronischen Schaltungen nach elektrischen Gesichtspunkten zu konzipieren und zu optimieren sind. Die Vorgabe, daß jeweils zwei durch eine Hochfrequenzverbindung miteinander zu verbindende Punkte zweier elektronischer Schaltungen auf verschiedenen Platinen einander gegenüberliegen sollen, würde den zur Optimierung nach elektrischen GesichtsDunkten erforderlichen Freiheitsgrad in unzumutbarer Weise beschränken.

In der Praxis sind daher zwei durch eine Hochfrequenzverbindung miteinander zu verbindende Punkte zweier Schaltungen auf verschiedenen Platinen mehr oder weniger weit seitlich gegeneinander versetzt. Der von einem elektrooptischen Wandler ausgehende Lichtstrahl muß sich in diesem Fall schräg zu den einander gegenüberliegenden Flachseiten in Richtung zu den zugeordneten optoelektrischen Wandlern auf der anderen Platine ausbreiten. Eine Vorrichtung mit einer derart schrägen Ausbreitung der Lichtstrahlen ist aus H.S. Hinton: Architectural considerations for photonic switching networks, Journal of Selected Areas in Communications 6 (1988) 7, S. 1209 - 1226 bekannt. Bei dieser Vorrichtung breiten sich die Lichtstrahlen in freier Strahlausbreitung aus.

Es hat sich jedoch gezeigt, daß eine derart schräge Ausbreitung eines Lichtstrahls mit freier Strahlausbreitung extrem hohe Anforderungen an die Herstellungstoleranzen stellt und daher für eine industrielle Massenfertigung nur wenig geeignet erscheint.

Eine Vorrichtung der eingangs genannten Art ist aus EP-A-0 440 087 bekannt. Bei dieser Vorrichtung wird jeder von einer Einkoppeleinrichtung einer Unterplatte erzeugte Lichtstrahl in dieser Unterplatte verbleibend einer Auskoppeleinrichtung dieser Unterplatte zugeführt.

Der Erfindung liegt die Aufgabe zugrunde, aufzuzeigen, wie bei einer Vorrichtung der eingangs genannten Art eine Steigerung der Leistungsdichte pro Volumen zu erreichen ist.

Diese Aufgabe wird durch die im kennzeichnenden Teil des Anspruchs 1 angegebenen Merkmale gelöst.

Die erfindungsgemäße Vorrichtung ist mit geringen Anforderungen an die Herstellungstoleranzen kostengünstig in industrieller Massenfertigung herstellbar.

Besondere Vorteile der erfindungsgemäßen Vorrichtung liegen darin, daß schräge Ausbreitungen von Lichtstrahlen vermieden und eine sehr hohe Leitungsdichte erreicht werden können und daß sehr hohe Bandbreiten verbunden mit einem nebensprechfreien Betrieb möglich sind.

Bevorzugte und vorteilhafte Ausgestaltungen der Erfindung gehen aus den Unteransprüchen hervor.

Die Erfindung wird in der folgenden Beschreibung anhand der Figuren beispielhaft näher erläutert. Es zeigen:
- Figur 1: in schematischer perspektivischer Darstellung ein zwischen zwei Platinen mit Schaltungsanordnungen angeordnetes Ausführungsbeispiel einer Vorrichtung nach dem Oberbegriff des Anspruchs 1,
- Figuren 2a bis 2c: eine Platte mit einer Einkoppelvorrichtung und einer Auskoppelvorrichtung einer Vorrichtung nach dem Oberbegriff des Anspruchs 1 in perspektivischer Darstellung, in Draufsicht auf eine Flachseite und in Draufsicht auf eine Stirnseite der Platte, und
- Figur 3: eine der Figur 2c entsprechende Draufsicht auf eine Platte einer erfindungsgemäßen Vorrichtung, wobei diese Platte aus drei zueinander parallelen Unterplatten besteht, von denen jede eine Einkoppeleinrichtung und eine Auskoppeleinrichtung aufweist.

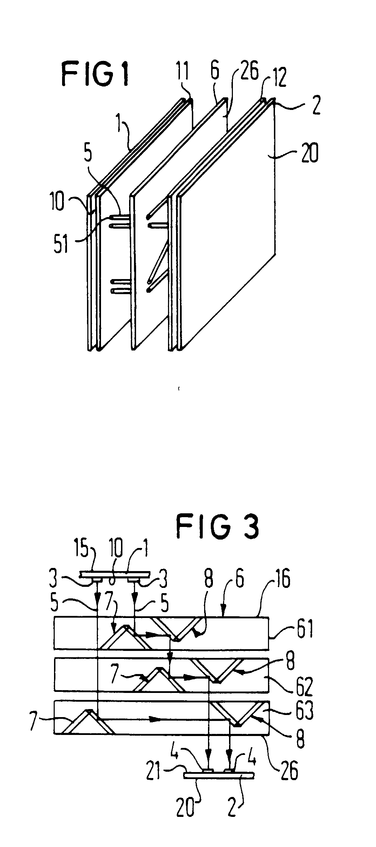

Die Figuren 1 bis 2c und die diesbezügliche Beschreibung dienen dazu, das Verständnis der Erfindung zu erleichtern.

In der Figur 1 ist mit 1 und 2 jeweils eine Platine bezeichnet, die eine nicht dargestellte elektronische Schaltungsanordnung trägt, wobei die Schaltungsanordnungen beider Platinenl und 2 durch eine Vielzahl von Hochfrequenzverbindungen miteinander zu verbinden sind. Diese Hochfrequenzverbindungen werden optisch realisiert.

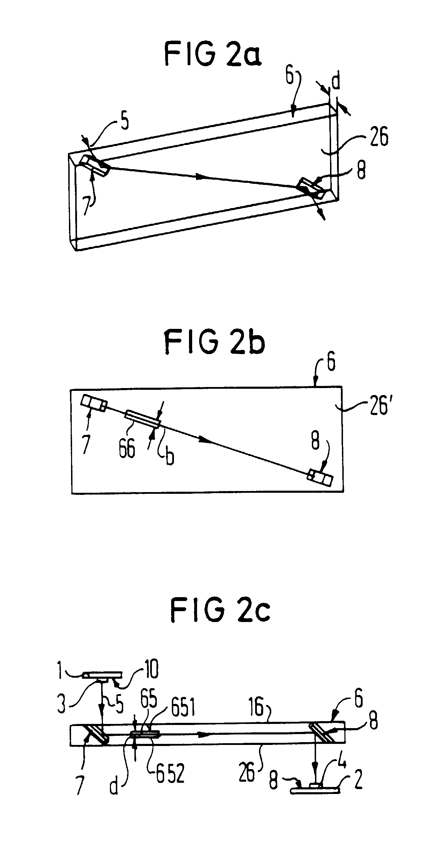

Dazu weist die Platine 1 auf ihrer der anderen Platine 2 zugekehrten und in der Figur 1 teilweise sichtbaren Flachseite 10 eine Vielzahl von in der Figur 1 nicht sichtbaren oder dargestellten elektrooptischen Wandlern 3 (siehe Figuren 2c und 3),beispielsweise in Form von Halbleiterlasern, auf, die schaltungsbedingt über der Flachseite 10 verteilt sind.

Die andere Platine 2 weist auf ihrer in der Figur 1 nicht sichtbaren, von ihrer sichtbaren Flachseite 20 abgekehrten und der Flachseite 10 der Platine 1 zugekehrten Flachseite 21 (siehe Figuren 2c und 3) eine Vielzahl nicht sichtbarer optoelektrischer Wandler 4 (siehe Figuren 2c und 3), beispielsweise in Form von Photodetektoren, auf, die ebenfalls schaltungsbedingt über dieser Flachseite 21 der anderen Platine 2 verteilt sind.

Die Verteilung der elektrooptischen Wandler 3 und die Verteilung der optoelektrischen Wandler 4 sind in der Praxis derart verschieden voneinander, daß sich die paarweise einander zugeordneten elektrooptischen Wandler 3 und optoelektrischen Wandler 4 von Ausnahmen abgesehen, nicht gegenüberliegen oder decken. In der Praxis liegen ein elektrooptischer Wandler 3 und der ihm zugeordnete optoelektrische Wandler 4 seitlich in Richtung der Flachseiten 10 und 21 der Platinen 1 und 2 mehr oder weniger weit auseinander, so daß sie nur durch einen schräg zu diesen Flachseiten 10 und 21 sich ausbreitenden Lichtstrahl 5 miteinander verbunden werden können.

Um dies zu vermeiden, ist zwischen den Platinen 1 und 2 eine Platte 6 aus optisch transparentem Material angeordnet, in die jeder von einem elektrooptischen Wandler 3 erzeugte Lichtstrahl 5 einer Einkoppeleinrichtung 7 (siehe Figuren 2 und 3) über eine der einen Platine 1 zugekehrten Flachseite 16 der Platte 6 einkoppelbar ist, und in welcher sich dieser Lichtstrahl 5 zwischen der einen Flachseite 16 und einer von dieser Flachseite 16 abgekehrten und der anderen Platine 2 zugekehrten Flachseite 26 der Platte 6 zu einer in der Nähe des diesem Lichtstrahl 5 zugekehrten opoelektrischen Wandlers 4 liegenden Auskoppeleinrichtung 8 ausbreitet und an dieser Auskoppeleinrichtung 8 über die Flachseite 26 der Platte 6 in Richtung zum optoelektrischen Wandler 4 auskoppelbar ist.

Es sei darauf hingewiesen, daß nicht notwendigerweise der über eine Flachseite, beispielsweise die Flachseite 16 der Platte 6, eingekoppelte Lichtstrahl 5 auf der von dieser Flachseite 16 abgekehrten Flachseite 26 der Platte 6 ausgekoppelt werden muß. Dieser Lichtstrahl könnte wieder aus der einen Flachseite 16 ausgekoppelt werden. Die Platinen 1 und 2 wären in diesem Fall gegenüber ein und derselben Flachseite, beispielsweise der Flachseite 16 der Platte 6 und nicht wie im Beispiel nach Figur 1 gegenüber beiden Flachseiten 16 und 26 anzuordnen.

Durch die Platte 6 ist es möglich, daß jeder elektrooptische Wandler 3 auf der betreffenden Platine 1 so angeordnet oder ausgebildet werden kann, daß der von ihm erzeugte Lichtstrahl 5 senkrecht zur Flachseite 10 dieser Platine 1 abstrahlt und senkrecht auf die Flachseite 21 der anderen Platine 2 auftrifft.

Bei gewissen elektrooptischen Wandlern 3, beisoielsweise bei Halbleiterlasern, wird dieser Lichtstrahl 5 aber nicht als vorzuziehendes Parallelstrahlenbündel, sondern als ungünstiger divergenter Strahl erzeugt, dessen Durchmesser mit zunehmendem Abstand von der Quelle 3 größer wird. Es ist deshalb zweckmäßig, diesen divergenten Strahl mittels einer optischen Linse 51 zu einem Parallelstrahlenbündel zu kollimieren, bevor er auf die Platte 6 trifft. Da eine Vielzahl solcher elektrooptischer Wandler 3 vorgesehen ist, ist es wegen der Größe der Platine zweckmäßig, eine entsprechende Vielzahl kleiner Linsen 51 vorzusehen, die in der gleichen Weise über der Flachseite 10 der Platine 1 verteilt sind , wie die elektrooptischen Wandler 3 dieser Platte, so daß jedem solchen Wandler 3 eine ihm zugeordnete Linse 51 gegenüberliegt. Eine derartige Verteilung kleiner optischer Linsen 51 läßt sich am einfachsten durch ein Hologramm realisieren, das auf einem plattenförmigen Hologrammträger 11 ausgebildet sein kann, der zwischen der Platine 1 und der Platte 6 anzuordnen ist.

Analog kann es zweckmäßig sein, einen aus der Platte 6 austretenden Strahl 5 nachträglich noch einmal zu kollimieren oder in einen konvergenten Strahl umzuwandeln, bevor er auf den zugeordneten optoelektrischen Wandler 4 der anderen Platine 2 trifft. Auch dies kann mittels optischer Linsen erfolgen, die den Linsen 51 entsprechen und durch ein Hologramm realisierbar sind, das auf einem plattenförmigen Hologrammträger 12 ausgebildet sein kann, der zwischen der Platte 6 und der anderen Linse 2 anzuordnen ist. Auch diese Linsen sind so über der Flachseite 21 der anderen Platine 2 zu verteilen, wie die elektrooptischen Wandler 4 auf dieser anderen Platine 2, so daß jedem solchen Wandler 4 eine ihm zugeordnete Linse gegenüberliegt.

Wenn bei jeder Platine 1 oder 2 auf einer Flachseite 10 bzw. 20 (Figuren 2 und 3) elektrooptische Wandler 3 und auf der anderen Flachseite 15 bzw. 21 elektrooptische Wandler 4 vorgesehen werden, lassen sich Anordnungen nach Figur 1 beliebig hintereinander schalten, wobei jeweils zwischen zwei benachbarten Platinen eine die Schaltungsanordnung dieser Platinen optisch verbindende Platte 6 angeordnet ist.

Die Platte 6 kann homogen aus transparentem Material bestehen und überall die gleiche Brechzahl aufweisen. Bei ausreichend großer Dicke d der Platte 6 kann sich der durch eine Einkoppeleinrichtung 7 in die Platte 6 eingekoppelte Lichtstrahl 5 frei oder ungeführt in der Platte 6 zur zugeordneten Auskoppeleinrichtung 8 ausbreiten.

Die Platte 6 kann auch einen in der Figur 2c bruchstückhaft und im Schnitt angedeuteten Schichtwellenleiter 65 definieren, der in oder parallel zur Ebene der Platte 6 angeordnet ist. In diesem Fall ist die Dicke d eines lichtführenden Bereichs der Platte 6 so klein, daß der durch die betreffende Einkoppeleinrichtung 7 eingekoppelte Lichtstrahl 5 zwischen Flachseiten 651 und 652 dieses lichtführenden Bereichs geführt ist. In der Praxis wird dies beispielsweise so realisiert, daß die Platte 6 aus einem Trägerkörper mit einer eine ausreichende Stabilität vermittelnden Dicke besteht, und daß auf oder in diesem Trägerkörper eine wellenleitende Schicht 65 mit einer Dicke d ausgebildet ist, in welcher der eingekoppelte Lichtstrahl 5 geführt wird.

Anstelle oder zusätzlich zu einem Schichtwellenleiter, der flächig über der ganzen Platte 6 verteilt ist, kann in der Platte 6 auch ein von einer Einkoppeleinrichtung 7 zu einer Auskoppeleinrichtung 8 führender, in der Figur 2b bruchstückhaft angedeuteter streifenartiger Wellenleiter 66 definiert sein, der sich von dem Schichtwellenleiter 65 lediglich dadurch unterscheidet, daß er neben der kleinen Dicke d des Schichtwellenleiters 65 auch eine geringe Breite b aufweist.

Erfindungsgemäß besteht die Platte 6 aus zwei oder mehreren zueinander parallelen Unterplatten 61, 62, 63 (Siehe Fig. 3), von denen jede zumindest eine Einkoppeleinrichtung 7 und eine Auskoppeleinrichtung 8 zum Ein- und Auskoppeln eines Lichtstrahls 5 aufweist, wobei zumindest ein in eine Unterplatte, beispielsweise die Unterplatte 61, eingekoppelter Lichtstrahl 5 von einer Auskoppeleinrichtung 8 dieser Unterplatte 61 in Richtung zu einer Einkoppeleinrichtung 7 einer anderen Unterplatte, beispielsweise die Unterplatte 62, auskoppelbar ist. Beispielsweise durchdringt ein von einem elektrooptischen Wandler 3 senkrecht zur Flachseite 16 der gesamten Platte 6 ausgesandter Lichtstrahl 5 die Unterplatten 61 und 62 senkrecht und wird durch eine Einkoppeleinrichtung 7 in die Unterplatte 63 eingekoppelt, in der er sich zu einer Auskoppeleinrichtung 8 dieser Unterplatte 63 ausbreitet. An dieser Auskoppeleinrichtung 8 wird dieser Lichtstrahl 5 über die Flachseite 26 der gesamten Platte 6 senkrecht zu dieser Flachseite 26 ausgekoppelt und einem diesem einen elektrooptischen Wandler 3 zugeordneten optoelektrischen Wandler 4 zugeführt. Ein von einem anderen elektrooptischen Wandler 3 senkrecht zur Flachseite 16 der gesamten Platte 6 ausgesandter zweiter Lichtstrahl 5 wird durch eine Einkoppeleinrichtung 7 in die Unterplatte 61 eingekoppelt, breitet sich in dieser zu einer Auskoppeleinrichtung 8 dieser Unterplatte 61 aus, wird an dieser Auskoppeleinrichtung 8 aus der Unterplatte 61 ausgekoppelt und einer Einkoppeleinrichtung 7 der Unterplatte 62 zugeführt, die den ausgekoppelten Lichtstrahl 5 in die Unterplatte 62 einkoppelt, in welcher der eingekoppelte Lichtstrahl 5 einer Auskoppeleinrichtung 8 dieser Unterplatte 62 zugeführt wird. Der an dieser Auskoppeleinrichtung 8 der Unterplatte 62 senkrecht zu deren Flachseite ausgekoppelte Lichtstrahl 5 durchdringt die Unterplatte 63 senkrecht zur Flachseite 26 der gesamten Platte 6 und wird einem dem anderen elektrooptischen Wandler 3 zugeordneten optoelektrischen Wandler 4 zugeführt.

Die Unterplatten 61, 62 und 63 werden vorteilhafterweise als parallele Schichtwellenleiter auf einem Trägerkörper ausgebildet (Multilayer-Anordnung). Anstelle der Schichtwellenleiter können auch beispielsweise dünne Schichten verwendet werden, in denen Streifenwellenleiter ausgebildet sind, von denen jeder von einer Einkoppeleinrichtung 7 zu einer Auskoppeleinrichtung 8 führt. Diese Einrichtung nach Figur 3 ist besonders bei Verwendung von Streifenwellenleitern günstig, weil dann sich kreuzende streifenartige Wellenleiter vermieden werden können. Während sich frei ausbreitende und kreuzende Lichtstrahlen nicht beeinflussen, entstehen bei sich kreuzenden streifenartigen Wellenleitern Probleme, beispielsweise Über- oder Nebensprechen. Die Einkoppel- und Auskoppeleinrichtungen 7 und 8 lassen sich auf einfache Weise durch Spiegel (siehe Figuren 2 und 3) realisieren. Anstelle von Spiegeln können auch Prismen, optische Gitter oder Hologramme verwendet werden. Auf einer Platte können auch verschiedene Realisierungen von Einkoppel- und Auskoppeleinrichtungen 7 und 8 ausgebildet sein.

Durch die Anordnung nach Figur 3 läßt sich eine Steigerung der Leistungsdichte pro Volumen erreichen.

## Patentansprüche

1. Vorrichtung zur Herstellung einer Vielzahl von Hochfrequenzverbindungen zwischen zwei Schaltungsanordnungen zur parallelen Datenverarbeitung, wobei für jede herzustellende Hochfrequenzverbindung je ein elektrooptischer Wandler (3) in einer der zwei Schaltungsanordnungen zur Erzeugung eines Lichtstrahls (5) und ein zugeordneter, von diesem Lichtstrahl (5) getroffener optoelektrischer Wandler (4) in der anderen der zwei Schaltungsanordnungen vorhanden sind, wobei wenigstens eine Platte (6) aus optisch transparentem Material vorhanden ist, in die jeder von einem elektrooptischen Wandler (3) erzeugte Lichtstrahl (5) an einer in der Platte liegenden Einkoppeleinrichtung (7) über eine Flachseite (16) der Platte (6) einkoppelbar ist, und in welcher sich dieser Lichtstrahl (5) zwischen der einen Flachseite (16) und einer von dieser Flachseite (16) abgekehrten Flachseite (26) der Platte (6) zu einer in der Platte in der Nähe des diesem Lichtstrahl (5) zugeordneten optoelektrischen Wandlers (4) liegenden Auskoppeleinrichtung (8) ausbreitet und an dieser Auskoppeleinrichtung (8) über eine Flachseite (26) der Platte (6) in Richtung zum zugeordneten optoelektrischen Wandler (4) auskoppelbar ist, und wobei die Platte (6) aus zwei oder mehreren zueinander parallelen Unterplatten (61, 62, 63) besteht, von denen jede zumindest eine Einkoppel- und Auskoppeleinrichtung (7, 8) zum Ein- und Auskoppeln eines Lichtstrahls (5) aufweist, dadurch gekennzeichnet, daß zumindest eine in einer Unterplatte (61) angeordnete Auskoppeleinrichtung (8) einer in einer anderen Unterplatte (62) angeordneten Einkoppeleinrichtung (7) so gegenüberliegt, daß ein in die eine Unterplatte (61) eingekoppelter Lichtstrahl (5) von der Auskoppeleinrichtung (8) dieser Unterplatte (61) in Richtung zu der Einkoppeleinrichtung (7) der anderen Unterplatte (62) ausgekoppelt wird.

2. Vorrichtung nach Anspruch 1, **dadurch gekennzeichnet,** daß jede Unterplatte (61, 62, 63) homogen aus dem transparenten Material besteht und überall die gleiche Brechzahl aufweist.

3. Vorrichtung nach Anspruch 1 oder 2, **dadurch gekennzeichnet,** daß jede Unterplatte (61, 62, 63) einen Schichtwellenleiter definiert.

4. Vorrichtung nach einem der vorhergehenden Ansprüche, **dadurch gekennzeichnet,** daß in jeder Unterplatte (61, 62, 63) ein von einer Einkoppeleinrichtung (7) zu einer Auskoppeleinrichtung (8) führender streifenartiger Wellenleiter definiert ist.

5. Vorrichtung nach einem der vorhergehenden Ansprüche, **dadurch gekennzeichnet,** daß eine Einkoppeleinrichtung (7) einen Spiegel, ein Prisma, ein optisches Gitter oder ein Hologramm aufweist.

6. Vorrichtung nach einem der vorhergehenden Ansprüche, **dadurch gekennzeichnet,** daß eine Auskoppeleinrichtung (8) einen Spiegel, ein Prisma, ein optisches Gitter oder ein Hologramm aufweist.

## Claims

1. Device for producing a multiplicity of radio-frequency connections between two circuit arrangements for parallel data processing, there being present for each radio-frequency connection to be produced one electro-optic transducer (3) in one of the two circuit arrangements for generating a light beam (5), and an assigned optoelectric transducer (4), which is struck by said light beam (5), in the other of the two circuit arrangements, there being present at least one plate (6) which is made from optically transparent material, into which each light beam (5) generated by an electro-optic transducer (3) can be launched via a flat side (16) of the plate (6) at a launching device (7) situated in the plate, and in which said light beam (5) propagates between the one flat side (16) and a flat side (26), averted from said flat side (16), of the plate (6) to an output device (8) situated in the plate in the vicinity of the optoelectric transducer (4) assigned to said light beam (5), and can be output at said output device (8) via a flat side (26) of the plate (6) in the direction of the assigned optoelectric transducer (4), the plate (6) comprising two or more mutually parallel subplates (61, 62, 63) of which each has least one launching and output device (7, 8) for launching and outputting a light beam (5), characterized in that at least one output device (8) arranged in a subplate (61) is situated opposite a launching device (7) arranged in another subplate (62) in such a way that a light beam (5) launched into the one subplate (61) is output by the output device (8) of said subplate (61) in the direction of the launching device (7) of the other subplate (62).

2. Device according to Claim 1, characterized in that each subplate (61, 62, 63) consists homogeneously of the transparent material and has the same refractive index everywhere.

3. Device according to Claim 1 or 2, characterized in that each subplate (61, 62, 63) defines a planar waveguide.

4. Device according to one of the preceding claims, characterized in that a strip-type waveguide leading from a launching device (7) to an output device (8) is defined in each subplate (61, 62, 63).

5. Device according to one of the preceding claims, characterized in that a launching device (7) has a mirror, a prism, an optical grating or a hologram.

6. Device according to one of the preceding claims, characterized in that an output device (8) has a mirror, a prism, an optical grating or a hologram.

## Revendications

1. Appareil pour la réalisation d'une multiplicité de connexions à haute fréquence entre deux dispositifs de circuit pour le traitement parallèle de données, pour lequel sont présents pour chaque connexion à haute fréquence à réaliser à chaque fois un convertisseur électro-optique (3) dans un des deux dispositifs de circuit pour la production d'un rayon lumineux (5) et un convertisseur opto-électrique (4) correspondant touché par ce rayon lumineux (5) dans l'autre des deux dispositifs de circuit, pour lequel au moins une plaque (6) en matériau optiquement transparent est présente, dans laquelle chaque rayon lumineux (5) produit par un convertisseur électro-optique (3) peut être couplé à travers une face plane (16) de la plaque (6) au niveau d'un dispositif de couplage (7) disposé dans la plaque, et dans laquelle ce rayon lumineux (5) se propage entre la face plane (16) et une face plane (26) de la plaque (6) opposée à cette face plane (16) vers un dispositif de découplage (8) situé dans la plaque à proximité du convertisseur opto-électrique (4) attribué à ce rayon lumineux (5), ledit rayon lumineux pouvant être découplé par l'intermédiaire d'une face plane (26) de la plaque (6) au niveau de ce dispositif de découplage (8) en direction du convertisseur opto-électrique (4) correspondant, et pour lequel la plaque (6) est constituée de deux ou plusieurs sous-plaques (61, 62, 63) parallèles les unes aux autres, parmi lesquelles chacune présente au moins un dispositif de couplage et de découplage (7, 8) pour le couplage et le découplage d'un rayon lumineux (5), caractérisé en ce qu'au moins un dispositif de découplage (8) disposé dans une sous-plaque (61) fait face à un dispositif de couplage (7) disposé dans une autre sous-plaque (62), de telle façon qu'un rayon lumineux (5) couplé dans la sous-plaque (61) est découplé par le dispositif de découplage (8) de cette sous-plaque (61) en direction du dispositif de couplage (7) de l'autre sous-plaque (62).

2. Appareil selon la revendication 1, caractérisé en ce que chaque sous-plaque (61, 62, 63) est constituée de façon homogène par le matériau transparent et présente partout le même indice de réfraction.

3. Appareil selon la revendication 1 ou 2, caractérisé en ce que chaque sous-plaque (61, 62, 63) définit un guide d'ondes sous forme de couche.

4. Appareil selon l'une des revendications précédentes, caractérisé en ce qu'est défini dans chaque sous-plaque (61, 62, 63) un guide d'ondes en forme de bande qui conduit d'un dispositif de couplage (7) à un dispositif de découplage (8).

5. Appareil selon l'une des revendications précédentes, caractérisé en ce qu'un dispositif de couplage (7) présente un miroir, un prisme, un réseau de diffraction ou un hologramme.

6. Appareil selon l'une des revendications précédentes, caractérisé en ce qu'un dispositif de découplage (8) présente un miroir, un prisme, un réseau de diffraction ou un hologramme.
